(19) Europäisches Patentamt
European Patent Office
Office européen des brevets

(11) Publication number: **0 100 275**
**B1**

(12) **EUROPEAN PATENT SPECIFICATION**

(45) Date of publication of patent specification: **08.07.87**

(51) Int. Cl.$^4$: **G 01 S 17/74,** G 02 F 1/01

(21) Application number: **83401501.8**

(22) Date of filing: **21.07.83**

(54) **Trihedron-shaped deformable reflectors.**

(30) Priority: **22.07.82 FR 8212832**

(43) Date of publication of application:
**08.02.84 Bulletin 84/06**

(45) Publication of the grant of the patent:
**08.07.87 Bulletin 87/28**

(84) Designated Contracting States:
**DE GB**

(56) References cited:
**FR-A-2 290 673**
**FR-A-2 591 151**
**US-A-3 863 064**
**US-A-3 873 191**

**IEEE JOURNAL OF QUANTUM ELECTRONICS, vol. QE-17, no. 12, December 1981, pages 172-174, New York, USA T. SATO: "Corner-cube array coat"**

(73) Proprietor: **Office National d'Etudes et de Recherches Aerospatiales (O.N.E.R.A.)**
**29 Avenue de la Division Leclerc**
**F-92320 Châtillon-sous-Bagneux (FR)**

(72) Inventor: **Durrenberger, Pierre**
**La Charreirasse**
**F-04230 Saint Etienne les Orgues (FR)**

(74) Representative: **Martinet & Lapoux**
**62, rue des Mathurins**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 100 275 B1

Courier Press, Leamington Spa, England.

**Description**

This invention relates to deformable reflectors and more particularly to optical trihedral deformable reflectors made up of three planar mirrors forming in twos orthogonal dihedrons at $90°\pm\varepsilon$. Such reflectors illuminated by a beam from a light source have the property of reflecting the light toward the source after reflection on each of their three faces, where the orientation of the trihedron can vary over a wide range.

The reflected light beam is cone shaped, focused on the source, with divergence $2\delta$ substantially proportional to the orthogonality defect $\varepsilon$ of the dihedrons. The illumination of a photoelectric receiver by the reflected light, placed near the source, is thus inversely proportional to the square $\varepsilon^2$ of the dihedron orthogonality defect. Any variation in $\varepsilon$ results in a variation in the illumination.

Devices exist capable of deforming optical surfaces in terms of a low energy electrical signal (Cf. FR—A—2519151 filed December 24, 1981 in the name of the applicants hereof). These devices cause a variation in the curvature of an optical surface to which they apply loads by means of piezoelectric ceramics. They do not suit the variation in the divergence of the reflective cone of a traditional optical trihedron.

American patent No. 3,873,191 issued March 25, 1975 discloses a process, subsequently transferred to the applicant hereof by contract, for producing optical trihedrons having high precision qualities as regards orthogonality. This procedure consists of making firstly a trihedral print hollowed out in a material (mould) using a stamp, then of using a trihedral model made of glass, silicon or any other hard material, machined by means of conventional tooling to the desired accuracy $90°\pm\varepsilon$. The three faces of the trihedron in the model are gold plated by vaporization in a vacuum under special conditions. This male model is then inserted in the mould print with a resin interlay. After resin cure, the model merely has to be extracted; the resin and the layer of gold remain fixed inside the print. A hollowed trihedron replica is thus obtained having strictly the same shape as the model. Generally speaking, the aim of this known process is to obtain a trihedron with a stable shape and the mould is made of stabilized metal. For general purpose use, the trihedrons produced along these lines have an angle of divergence $2\delta$ lying between 8 and 50 seconds of an arc.

The invention relates to a reflector and to an apparatus as defined in Claims 1 and 4, resepctively.

The invention will now be described in detail with reference made to the appended drawings in which:

- Fig. 1 is a geometric representation of a deformable tri-rectangular trihedron explaining the calculation for the variation in the dihedral angles of the trihedron in terms of the stretch of the piezoelectric material;
- Fig. 2 represents a trihedral reflector giving variation in the conicity of a reflected laser beam;
- Fig. 3 represents a deformable trihedron in accordance with the invention in which the trihedron is hollowed into a piezoelectrical material;
- Figs. 4 and 5 represent deformable trihedrons in accordance with the invention in which the trihedron is partially formed of piezoelectric material and partially of metal;
- Fig. 6 gives a curve of reflectors divergence versus the piezoelectric control voltage;
- Fig. 7 depicts in block-diagram form an optical telemeasurement system including an application for deformable trihedral reflectors; and
- Fig. 8 depicts in block-diagram form a scrambling system for adaptive optical arrangements.

In reference to Fig. 1, shown is a tri-rectangular trihedron 10 in the shape of a triangular pyramid O, PQR whose edges are OP, OQ, OR whose axis is OS and whose projections from the axis to the faces are OT, OU, OV. It is known that the angle $\varphi$ between the axis OS and each edge OP, OQ, OR is such that:

$$\cos\varphi=\sqrt{2}/\sqrt{3} \qquad \sin\varphi=1/\sqrt{3} \qquad \tan\varphi=1/\sqrt{2}$$

i.e. $\varphi=35°16'$ and that the angle $\psi$ between the axis OS and each of its projections OT, OU, OV onto a face of the trihedron is such that:

$$\cos\psi=1/\sqrt{3} \qquad \sin\psi=\sqrt{2}/\sqrt{3} \qquad \tan\psi=\sqrt{2}$$

i.e. $\psi=54°\,44'$.

Let:

A be the length of one side of the trihedron base triangle

a be the length of one edge

b be the height of one triangular face of the trihedron

dh be the variation in h under the piezoelectric effect

H be the thickness of the piezolectric plate

dH be the variation in H under the piezoelectric effect

E be the voltage across the piezoelectric material per unit length

$d_{33}$ be the piezolectric coefficient

$\Delta\varphi$ be the piezolectric variation in the angle $\varphi$

$\Delta\psi$ be the piezoelectric variation in the angle $\psi$.

The following can easily be deduced:

$$a=A/\sqrt{2} \qquad b=A/2 \qquad h=A/\sqrt{2}\times\sqrt{3}.$$

$$dH=d_{33}\times E\times H \qquad (1)$$

$$\Delta h=\Delta H\times\frac{h}{H} \qquad (2)$$

$$\Delta\varphi=(\Delta h \cos \varphi)/a \quad (3)$$

$$\Delta\psi=(\Delta h \sin \varphi)/b \quad (4)$$

By applying numerical values:

$$H=16 \text{ mm}$$

$$A=34 \text{ mm}$$

$$a=A/\sqrt{2}=24 \text{ mm}$$

$$b=A/2=17 \text{ mm}$$

$$h=A/\sqrt{2}\times\sqrt{3}=13.8 \text{ mm}$$

$$E=1000 \text{ volts/mm}$$

$$d_{33}=390\times10^{-12}$$

The resultant values from equation (1) are:

$$\Delta H=390.10^{-12}\times10^{3}\times16$$

$$\Delta H\cong6.2 \ \mu m$$

from equation (2)

$$\Delta h=6.2\frac{13.8}{16}\cong5 \ \mu m$$

and from equations (3) and (4):

$$\Delta\varphi=\Delta\psi\cong0.17\times10^{-3} \text{ rad.}$$

$$\Delta\varphi=\Delta\psi=35''$$

Hence

$$\Delta\varphi+\Delta\psi=70''$$

$(\Delta\varphi+\Delta\psi)$ is the variation in the right angle $\widehat{POU}$. To obtain ε, i.e. the variation in the dihedral right angle $\widehat{POQ}$, some allowance must be made for the fact that the plane POQ is inclined at 45° to the plane POU, whence

$$\varepsilon=(\Delta\varphi+\Delta\psi)/\sqrt{2}=50''$$

Fig. 2 depicts a light source, 1, e.g. a laser emitter that produces a beam 2. This beam falls onto a deformable trihedral reflector 10 in accordance with the invention that sends a return beam 3 superposed on the initial beam and having an angle of divergence 2δ. A variable voltage supplied by a generator 4 makes it possible to deform the trihedral reflector 10 to cause variation in its angle of divergence 2δ. Substantially, $\Delta(2\delta)=5\varepsilon$.

Depending on the divergence of the beam 3, the receiver 5 receives variable illumination.

In Fig. 3, the deformable trihedral reflector 10′ consists of piezoelectric discs 11 piled one on top of another, where the piezoelectric material can for example be a piezoelectric ceramic known commercially as PXE 21. The disc in the stack lie in planes perpendicular to the trihedron axis (OS in Fig. 1). The discs are polarized alternately and inversely and are fed alternately and oppositely by the generator 4. The even-number discs are fed across their lower and upper metalized terminal faces between positive and negative poles of the generator and the odd-number discs are fed across their lower and upper metalized terminal faces between the negative and positive poles of the generator.

The trihedron is manufactured as explained in the aforesaid U.S. patent. The reference 12 indicates the layer of resin interlaid between stamp and print (the print is made in the piezoelectric material) and reference 13 indicates the layer of gold which under manufacture is transferred from the stamp to the print.

In Figs. 4 and 5, the trihedron 10″ is made of metal, e.g. aluminium, and the piezoelectric discs, respectively 6 and 7, or 8 and 9 are glued beneath the trihedron. For the piezoelectric effect to be exerted on the trihedron, the latter and the piezoelectric discs are clamped inside a box 14 whose lateral wall is folded over the edge of the trihedron. The discs 6 and 7 are polarized in the same direction and are fed oppositely. The discs 8 and 9 are polarized oppositely and are fed in series.

Fig. 6 depicts a curve showing the divergence 2 of the return beam 3 in Fig. 2 in terms of the voltage across the piezoelectric material.

The curve is linear from 2 to 15 kV and has an avarage slope of 30″ per kV. Between 2000 and 3000 Volts for example, 2δ varies at a rate of 1.5 which corresponds to an illumination variation of $1.5^2\cong2.2$.

A general application of the deformable trihedral reflector in the invention lies in laser reflection systems in which the reflected beam carries information imparted thereto at the point of reflection. This information takes the form of a modulation in beam divergence.

With reference to Fig. 7, a continuous light emitter 21 and a photoelectric receiver 22 located adjacent to the emitter have been shown. The beam 23 emitted by the emitter can be scanned over an angular sector 25 whether the emitter/receiver are rotatably mounted or the scanning is achieved by means of an acousto-optical device. The emitted beam 23 falls successively on deformable trihedral reflectors $26_1$ to $26_4$ that reflect the incident beam 23 and send the reflected beam 24 toward the receiver while modulating the divergence. For this purpose, magnitude captors $27_1$ to $27_6$ for measuring $x_1$ to $x_6$ capture said magnitudes and are connected to frequency amplitude converters that control the trihedral reflectors. The converters can be connected individually to the trihedrons or several converters can be connected to a single trihedron via a multiplexer 29.

The photoelectric receiver 22 is connected to a detector 30 itself connected to a recorder 31. It will

be noted that the magnitudes $x_1$ to $x_6$ are recorded in sequence and in synchronism with the incident beam scan.

Fig. 8 shows an application of the trihedrons in the invention to system for defence against adaptive optical arrangements.

The rôle of these optical arrangements is to concentrate light energy on a target by compensating for the atmospheric defocusing effect. These arrangements consist of a combination of several mirrors each vibrated by a piezoelectric ceramic element at a different vibration $F_1, F_2 \ldots F_n$. A detector picks up the light retrodiffused by the target, and a system based on filtering selects that part of the signal received that corresponds to each mirror. A slaved set-up corrects the mean position of each mirror such that a maximum signal is received corresponding to the mirror in question.

A laser beam 32 is widened through an afocal optical arrangement 33 and falls onto a plurality of vibrating mirrors $34_1$ to $34_n$. These mirrors are held in vibration by vibration control signals at frequencies $F_1, F_2 \ldots F_n$ produced by sinusoïdal generators included in an electronic device 35. The beam reflected by the mirrors, thus modulated in direction, strikes a target 36 and light 37 thrown back by the target falls onto a photoelectric receiver 38. This receiver is connected to the electronic device 35 which filters the components of the retrodiffused light and selectively dephases the vabration control signal generators so as to maximize the signal reflected by the target.

One or several deformable trihedral reflectors such as 39 are located on the target and are deformed by a control signal or signals produced by the generator 40. The deformation control signal is determined such that slaving of the system is impossible. With this in mind, the trihedral reflectors are merely controlled by a signal whose spectrum includes at least one of the vibration frequencies.

The invention has been described with a deformable trihedral reflector composed of a stack of piezoelectric plates but the scope of the invention is nevertheless respected with a trihedron made of a single block of piezoelectric material, whereupon the electrodes are respectively disposed on the front and rear faces of the block.

**Claims**

1. A corner cube reflector for electromagnetic radiation comprising a body (10; 10', 11; 10''; 6, 7; 10'', 8, 9) provided with a trihedral recess (10'; 10'') the three faces of which are substantially mutually orthogonal and are of a reflecting material, characterized in that

— at least a part (6, 7; 8, 9; 10; 11) of said body consists of a piezoelectric material, and
— voltage generator means (4) for biasing said piezoelectric material are provided;

the piezoelectric material being so arranged and being so connected to the voltage generator means that the application of a biasing voltage to this material results in a corresponding deviation of the angles between said faces from orthogonality, thereby varying accordingly the divergence of a beam of electromagnetic energy reflected from said faces.

2. A corner cube reflector in accordance with claim 1, characterized in that the trihedral recess (10') is machined in a stack of piezoelectric plates (11), said plates being perpendicular to the ternary axis of symmetry of the recess, said voltage generator means biasing the piezoelectric material in order to increase or reduce the thickness of the plates.

3. A corner tube reflector in accordance with claim 1, characterized in that the trihedral recess (10'') is machined in a hard material, and in that plates (6, 7; 8, 9) of piezoelectric material are positioned on a surface of the hard material above the tip of the recess and are arranged perpendicular to the ternary axis of symmetry of the recess, the voltage generator means acting in order to increase or reduce the thickness of the plates.

4. An apparatus for modulating the angle of divergence of a beam of electromagnetic radiation in accordance with a modulating signal, the apparatus comprising a corner cube reflector according to any of the preceding claims, which reflector is arranged in the path of said beam, the biasing voltage applied to the piezoelectric material of said reflector being controlled by the modulating signal.

**Patentansprüche**

1. Würfeleckenreflektor für elektromagnetische Strahlung mit einem eine triedrisch geformte Ausnehmung (10'; 10'') aufweisenden Kopus (10; 10', 11; 10''; 6, 7; 10'', 8, 9), deren drei Flächen wechselseitig im wesentlichen orthogonal zu einander liegen und aus reflektierendem Material bestehen, dadurch gekennzeichnet, daß wenigstens ein Teil (6, 7; 8, 9; 10; 11) des Korpus aus einem piezoelektrischen Material besteht und daß eine Spannungsgebereinrichtung (4) zur Beaufschlagung des piezoelektrischen Materials vorgesehen ist, wobei das piezoelektrische Material derart angeordnet und mit der Spannungsgebereinrichtung verbunden ist, daß die Beaufschlagung des Materials mit einer Vorspannung zu einer entsprechenden Abweichung der Winkel zwischen den Flächen aus ihrer Orthogonalität führt, wodurch die Divergenz eines von den Flächen reflektierten elektromagnetischen Strahlungsbündels entsprechend verändert wird.

2. Würfeleckenreflektor nach Anspruch 1, dadurch gekennzeichnet, daß die triedrisch geformte Ausnehmung (10') in einen Stapel piezoeletrischer Platten (11) eingearbeitet ist, welche senkrecht zu den ternärern Symmetrieachsen der Ausnehmung sich erstrecken,

wobei die Spannungsgebereinrichtung das piezoelectrische Material zur Erhöhung oder Reduzierung der Plattenstärke beaufschlagt.

3. Würfeleckenreflektor nach Anspruch 1, dadurch gekennzeichnet, daß die triedrisch geformte Ausnehmung (10'') in hartes Material eingearbeitet ist, daß Platten (6, 7; 8, 9) aus piezoelektrischem Material auf eine Oberfläche des harten Materials über der Spitze der Ausnehmung positioniert und rechtwinklig zu den ternären Symmetrieachsen der Ausnehmung angeordnet sind, wobei die Spannungsgebereinrichtung zur Erhöhung oder Reduzierung der Plattenstärke wirkt.

4. Vorrichtung zur Modulation des Divergenzwinkels eines elektromagnetischen Strahlungsbündels entsprechend einem modulierenden Signal, mit einem Würfeleckenreflektor, nach einem der vorstehenden Ansprüche, der im Weg des Strahlungsbündels angeordnet ist, wobei die auf das piezoelektrische Material des Reflektors aufgebrachte Vorspannung durch das modulierende Signal gesteuert ist.

**Revendications**

1. Réflecteur en forme de coin de cube pour rayonner de l'énergie électromagnètique comprenant un corps (10; 10', 11; 10''; 6, 7; 10'', 8, 9) pourvu d'un creux en forme de trièdre (10'; 10'') dont les trois faces sont substantiellement orthogonales mutuellement et sont constituées par un matériau réfléchissant, caractérisé en ce que:

au moins une partie (6, 7; 8, 9; 10; 11) dudit corps est en un matériau piézoélectrique, et

des moyens (4) de produire une tension pour polariser ledit matériau piézoélectrique sont prévus.

le matériau piézoélectrique étant disposé et connecté aux moyens de produire une tension de façon que, de l'application d'une tension de polarisation audit matériau résulte une déviation correspondante des angles entre lesdites faces se départissant de l'orthogonalité, ce qui fait varier en conséquence la divergence d'un faisceau d'énergie électromagnétique réfléchi par lesdites faces.

2. Réflecteur en forme de coin de cube conforme à la revendication 1, caractérisé en ce que le creux en forme de trièdre (10') est usiné dans une pile de plaques piézoélectrique (11), lesdites plaques étant perpendiculuires à l'axe de symétrie ternaire du creux, lesdits moyens de produire une tension polarisant le matériau piézoélectrique en vue d'augmenter ou de réduire l'épaisseur de plaques.

3. Réflecteur en forme de coin de cube conforme à la revendication 1, caractérisé en ce que le creux en forme de trièdre (10'') est usiné dans un matériau dur, et en ce que les plaques (6, 7; 8, 9) du matériau piézoélectrique sont positionnés sur une surface du matériau dur située au-dessus du sommet du creux et sont disposées perpendiculairement à l'axe de symétrie ternaire du creux, les moyens de produire une tension agissant en vue d'augmenter ou de réduire l'épaisseur des plaques.

4. Appareil pour moduler l'angle de divergence d'un faisceau de rayonnement électromagnétique en dépendance d'une signal de modulation, l'appareil comprenant un réflecteur en forme de coin de cube conforme à l'une quelconque des revendications précédentes, ledits réflecteur étant disposé sur le trajet dudit faisceau, la tension de polarisation appliquée au matériau piézoélectrique dudit réflecteur étant commandée par le signal de modulation.

FIG.1

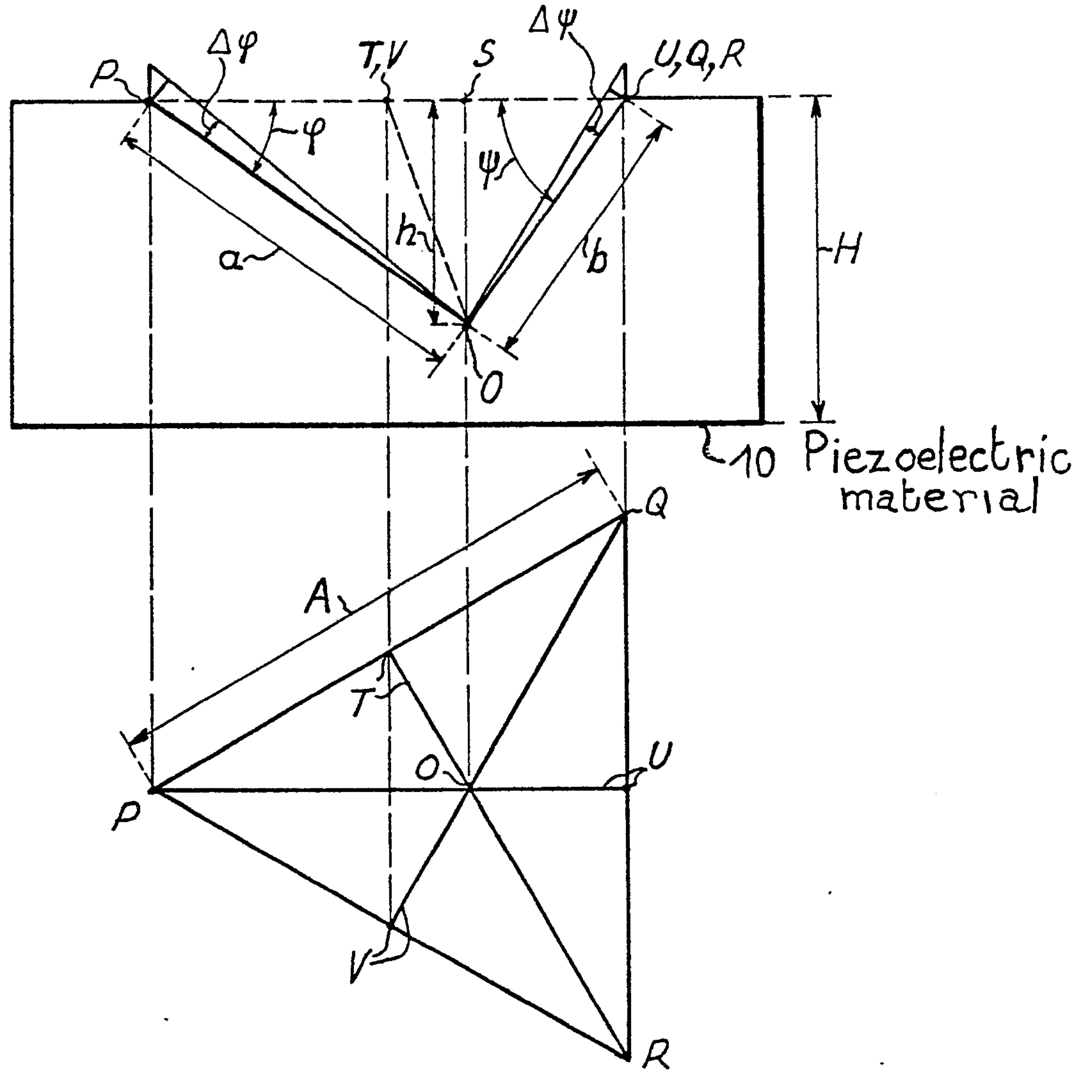
P
Δφ
T,V
S
Δψ
U,Q,R
φ
ψ
h
a
b
H
O
10 Piezoelectric material
Q
A
T
O
U
P
V
R

FIG.2

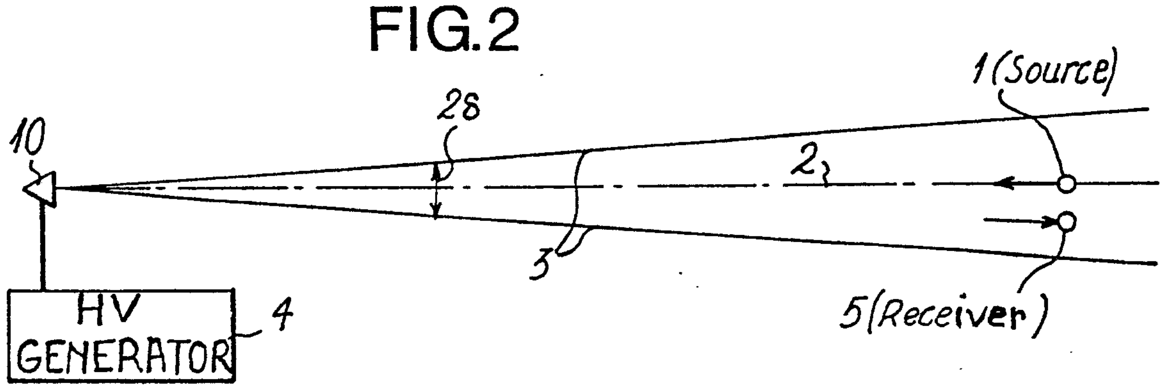
1 (Source)
2δ
10
2
3
HV GENERATOR
4
5 (Receiver)

FIG.3

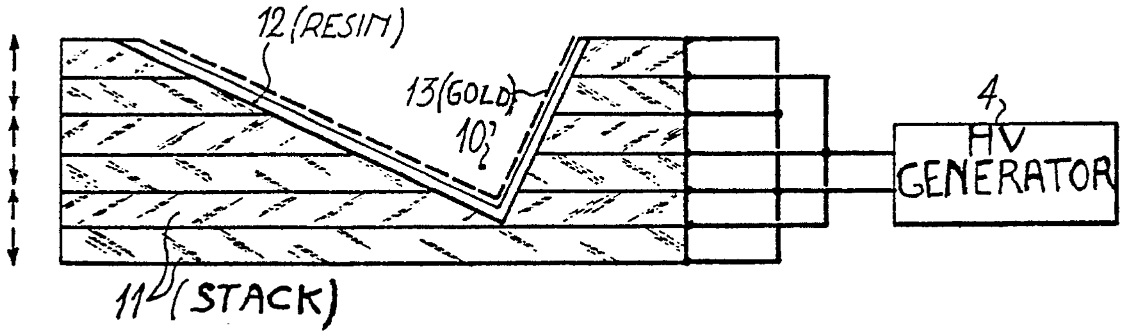


FIG.4

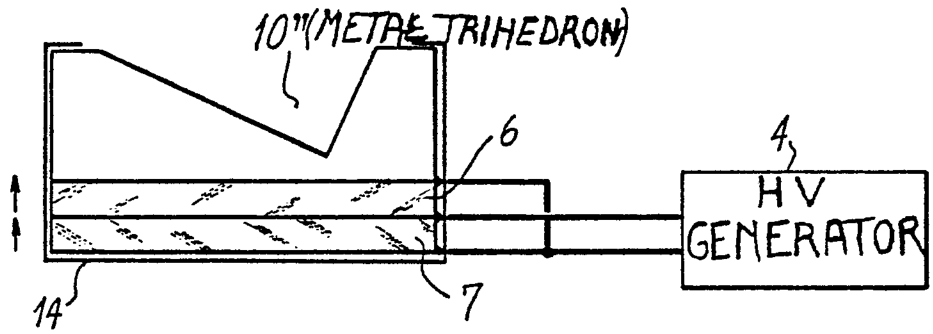


FIG.5

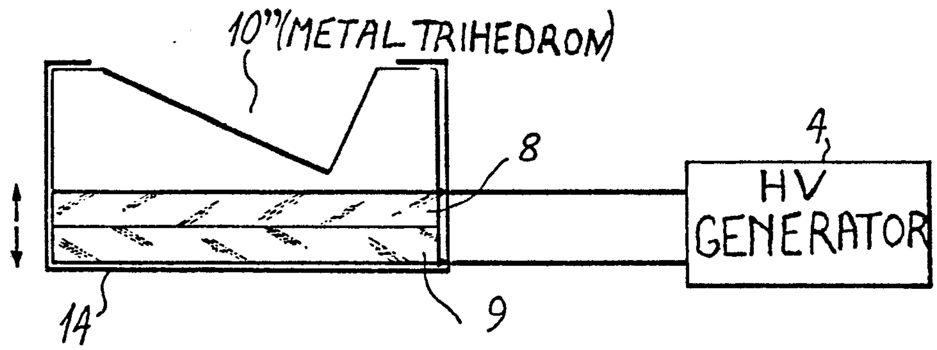

FIG.6

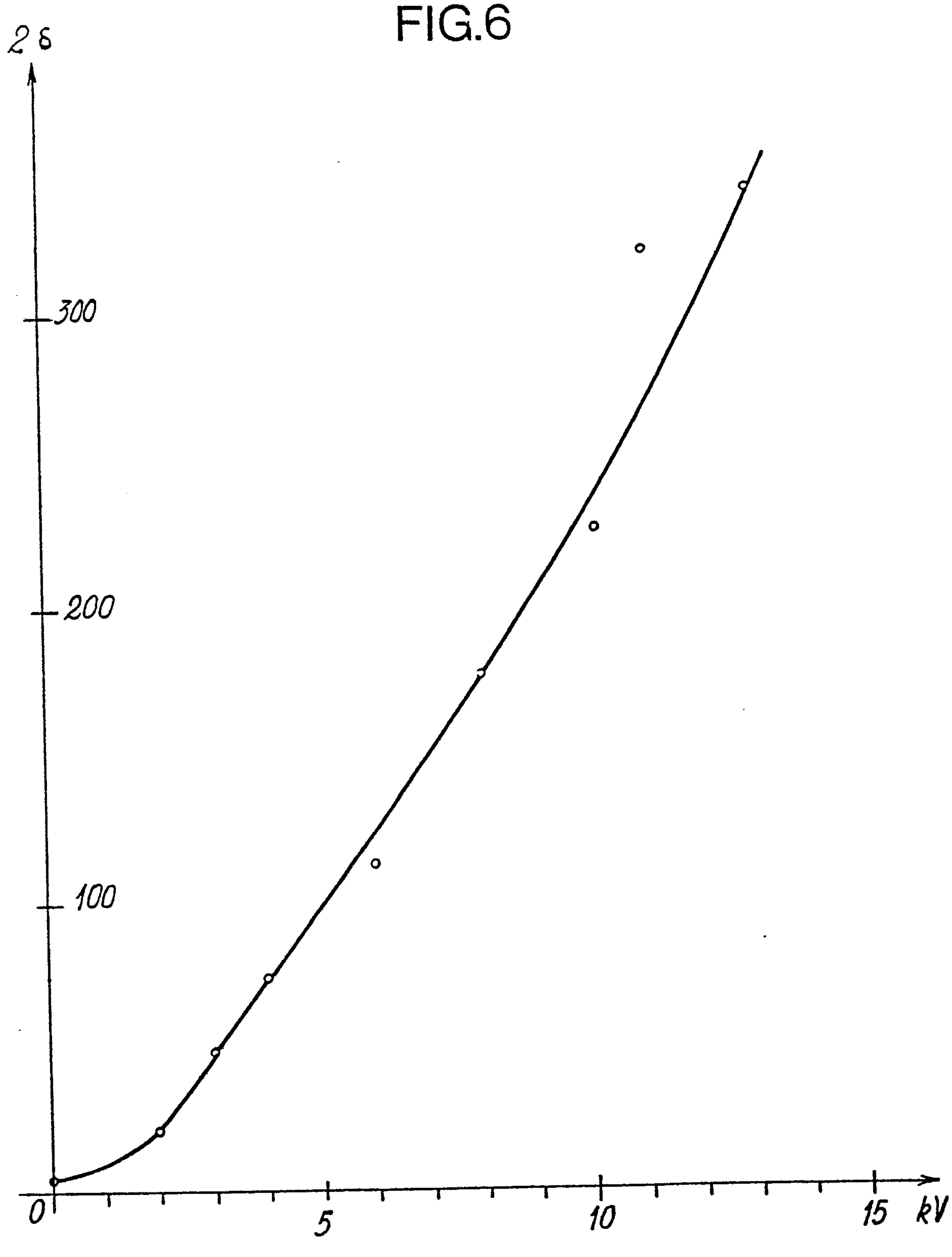

FIG.7

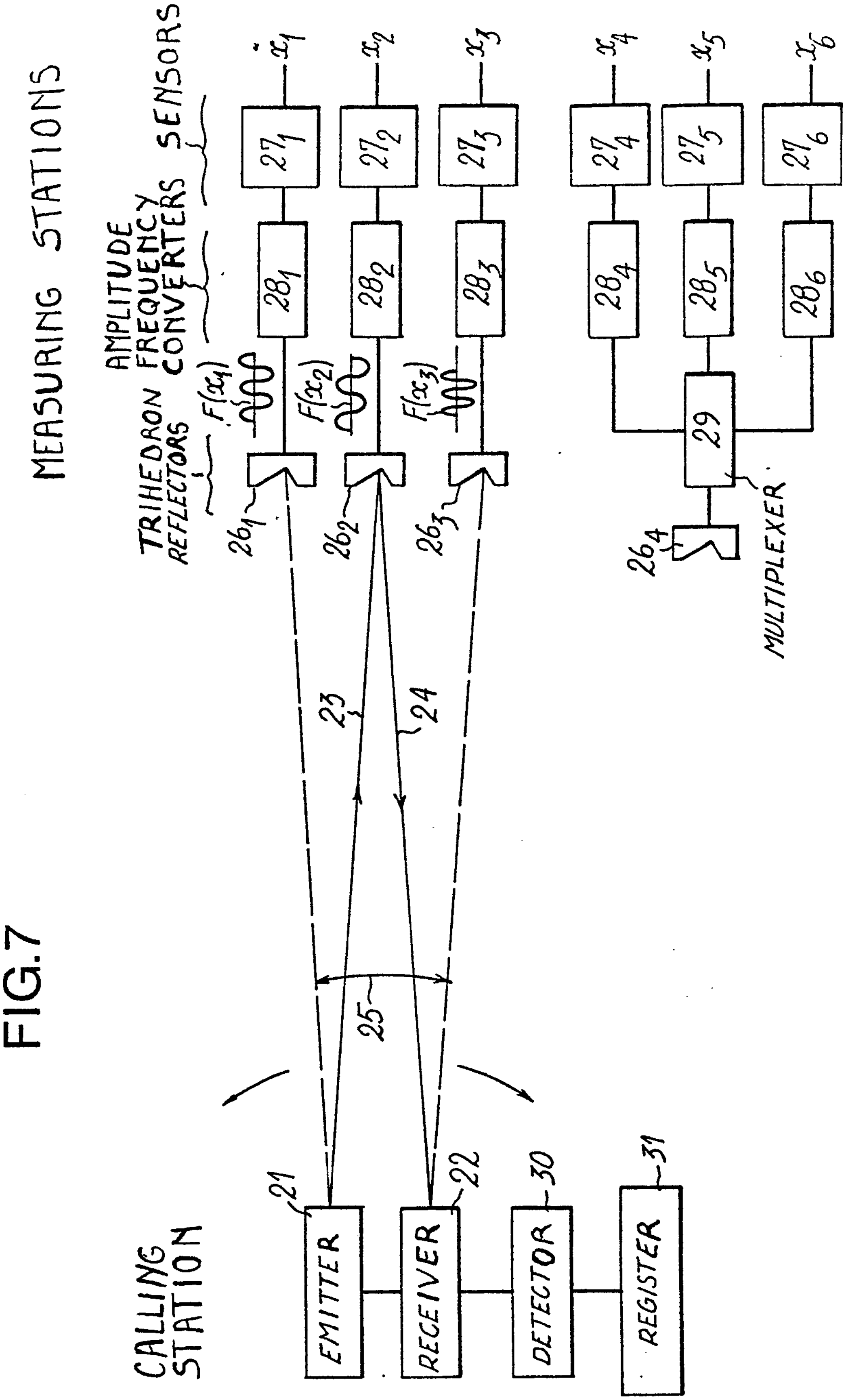
MEASURING STATIONS
CALLING STATION
TRIHEDRON REFLECTORS
AMPLITUDE FREQUENCY CONVERTERS
SENSORS
MULTIPLEXER
EMITTER
RECEIVER
DETECTOR
REGISTER
21
22
23
24
25
26₁
26₂
26₃
26₄
27₁
27₂
27₃
27₄
27₅
27₆
28₁
28₂
28₃
28₄
28₅
28₆
29
30
31
F(x₁)
F(x₂)
F(x₃)
x₁
x₂
x₃
x₄
x₅
x₆

FIG.8

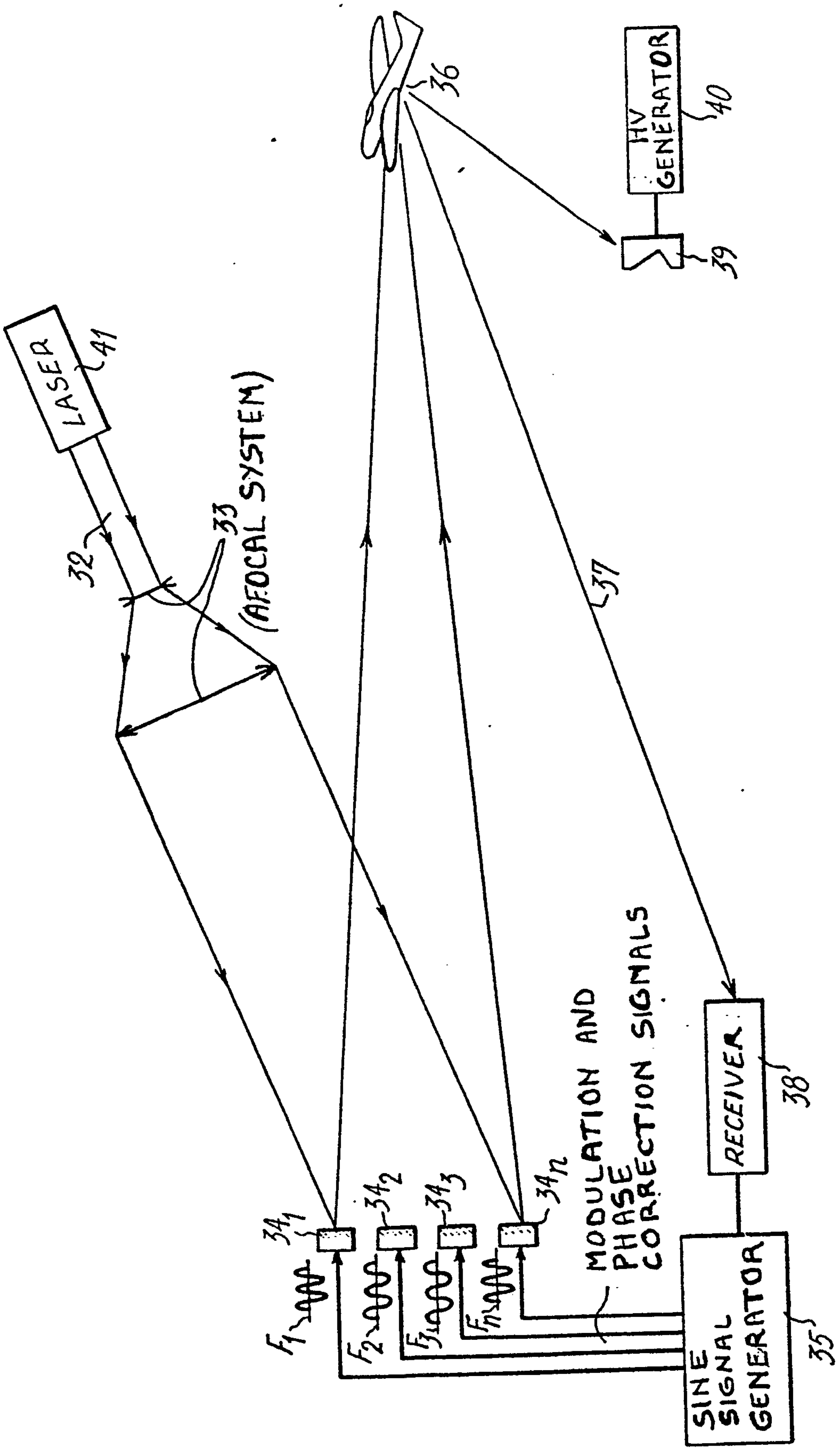
LASER
41
32
33
(AFOCAL SYSTEM)
36
HV GENERATOR
40
39
37
RECEIVER
38
MODULATION AND PHASE CORRECTION SIGNALS
SINE SIGNAL GENERATOR
35
$34_1$
$34_2$
$34_3$
$34_n$
$F_1$
$F_2$
$F_3$
$F_n$